(19) Europäisches Patentamt
European Patent Office
Office européen des brevets

(11) EP 3 154 002 A1

(12) EUROPEAN PATENT APPLICATION
published in accordance with Art. 153(4) EPC

(43) Date of publication:
12.04.2017 Bulletin 2017/15

(51) Int Cl.:
G06Q 10/00 (2012.01)

(21) Application number: 15891033.1

(86) International application number:
PCT/CN2015/087801

(22) Date of filing: 21.08.2015

(87) International publication number:
WO 2017/031631 (02.03.2017 Gazette 2017/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA

(71) Applicant: Boao Zongheng Network Technology
Co., Ltd
Guangzhou City, Guangdong 510620 (CN)

(72) Inventor: XIE, Xuhui
Guangzhou, Guangdong 510620 (CN)

(74) Representative: Sun, Yiming
HUASUN Patent- und Rechtsanwälte
Friedrichstraße 33
80801 München (DE)

(54) PATENT VALUE EVALUATION METHOD AND SYSTEM

(57) A method for patent value assessment and an online system for patent assessment; the invention uses different methods for assessing patents according to the foreseeability of earnings of the patent to be assessed of the next L years. The assessment calculation for patents of Class I will be used for calculation according to the information data of the patents of Class I in case the earnings of the patent to be assessed of the next L years are unforeseeable; while the assessment calculation for patents of Class II will be used for calculation according to the information data of the patents of Class II in case the earnings of the patent to be assessed of the next L years are foreseeable. Being more practical and in favor of the transaction, the method for assessing the patent value has favorable operability and can meet the requirements of different customers, so that the customers can have a preliminary assessment about the value of the patent to be assessed; the system has the features of modularization, realizing quick, easy and convenient patent value analysis.

Fig. 1

## Description

## Technical Field

The Invention relates to the value assessment of patents, and particularly to a method for patent value assessment and an online system for patent assessment.

## Background Art

Patent is an important intangible asset and the assessment of its value gets more and more attention in practice. However, there is no unified method and system of patent value assessment at present. It is found after retrieval that the patent value is mainly assessed based on legal parameters, economic parameters, technical parameters and the parameters as risks of industrialization and infringement. The above assessment parameters are very professional and not suitable for non-professionals, especially for the buyers and sellers of a transaction. It is to the disadvantage of both popularization and promotion of the method and the effective circulation of the patent; meanwhile, the current method for patent assessment only provides one assessment method with a small and incomplete scope of applicability, which cannot meet the requirements of different customers at the same time.

## Summary of the Invention

To overcome the defects during patent assessment that the assessment parameters are difficult to be obtained, the assessment method is of poor operability and cannot meet the requirements of different customers at the same time, the Invention uses a method for patent value assessment and a system thereof for facilitating obtaining assessment parameters and favorable operability and meeting the requirements of different customers with wider applicability.

A method for patent value assessment, wherein, the steps are as follows:

S00: Filling in the foreseeability of the patent earnings of the next L years based on the actual situation of the patent to be assessed; entering Step S10 in case the earnings of the next L years are unknown; entering Step S20 in case the earnings of the next L years are known;

S10: Filling in an information data sheet of patents of Class I and calculating the value of the patent to be assessed with the assessment method for patents of Class I;

S20: Filling in an information data sheet of patents of Class II and calculating the value of the patent to be assessed with an assessment method for patents of Class II.

Further, the information data sheet of patents of Class I comprises information data of patent type, data of R&D cost, data of application date, data of issue date, data of key industry and data of number of claims.

Further, the calculation formula for patents of Class I is:

$$P=[X*(1+t_1)^{M_3-M_1}+d]*Y;$$

wherein, P is a patent value; X is a patent cost parameter; $t_1$ is a basic annual interest rate; $M_1$ is a particular year of patent application, $M_3$ is the current year of the patent; d is an annual fee cost and Y is a product coefficient factor.

Further, the patent cost parameter X comprises at least one of a patent R&D cost a, a patent application cost b and an additional charge cost c; the product coefficient factor Y comprises at least one of a coefficient of key industry f, a coefficient of remaining years g and a factor coefficient of claims h.

Further, the calculation method for the additional charge cost c is: confirming the number of claims t; when t is greater than or equal to 10, c=300*(t-10); when t is less than 10, c=0.

Further, the calculation method for the factor coefficient of claims is: confirming the number of claims t; when t is less than or equal to 5, h=t/5; when t is greater than 5, h=1;

The method for determining the coefficient of key industry f is: confirming whether the industry of the patent is a key industry; when it is a key industry, f=1.5 and when it is a non-key industry, f=1;

the calculation method for the coefficient of remaining years g is: confirming the remaining years e; when e is less than 5, g=(1-1/e); when e is greater than or equal to 5, g=1; wherein, e is greater than or equal to 1.

Further, the calculation method for the annual fee cost is:

taking $M_2$ as the year of patent issuing; taking $N_1$ and $N_2$ as the month of patent application and the month of patent issuing respectively;

when $N_1$ is greater than $N_2$, d=annual fee of $(M_3-M_1)^{th}$ year * $(1+t1)1$+annual fee of $(M_3-M_1-1)^{th}$ year * $(1+t_1)2$+......+annual fee of $(M_2-M_1)^{th}$ year * $(1+t_1)^{M_3-M_2+1}$;

when $N_1$ is less than or equal to $N_2$, d=annual fee of $(M_3-M_1)^{th}$ year * $(1+t1)1$+annual fee of $(M_3-M_1-1)^{th}$ year * $(1+t_1)2$+......+annual fee of $(M_2-M_1+1)^{th}$ year * $(1+t_1)^{M_3-M_2}$.

Further, the information data sheet of patents of Class II comprises information data of patent type, data of patent application date, data of gross profit of non-patent products, data of gross profit of patent products, data of operation management expenses and data of income tax.

Further, the calculation formula for patents of Class II is:

$$ P = \sum_{i=1}^{L} \frac{B_i - A_i - D_i - F_i}{(1 + r)^i} + \frac{B_L - A_L - D_L - F_L}{r(1 + r)^L} \left[ 1 - \frac{1}{(1 + r)^{e-L}} \right] ; $$

wherein, P is a patent value, r is a discount rate, A is a gross profit of non-patent products, B is a gross profit of patent products, D is operation management expenses, F is an income tax and L is a fixed number of years of prospective earnings.

On the other hand, the Invention discloses a system of patent value assessment, comprising a judgment module 1, a data input module 2, a data operation module 3 and a display module 4; the data input module 2 is used for reading the data inputted by users and sending it to the data operation module 3 and the judgment module 1; the judgment module 1 is used for judging the foreseeability of the patent earnings of the next L years and figuring out the judgment result; the data operation module 3 is used for calculating the inputted data with different assessment methods for patent value according to the judgment result and figuring out the patent value P; the display module 4 is used for displaying the patent value P to customers.

The parameters used on the Invention is easy to be obtained and closely related to the patent to be assessed; with a favorable operability, it is suitable for the non-professionals, especially for the buyers and the sellers of a patent transaction; meanwhile, in favor of the transaction, the method and the system provide two different calculation methods for assessment, so that the requirements of different customers can be met and the customers can have a preliminary assessment about the value of the patent to be assessed. The Invention solves the problems of the difficulty in obtaining assessment parameters, the poor operability and that the requirements of different customers cannot be met; the Invention is of preferable operability and can meet the requirements of different customers with a wider applicability.

**Brief Description of the Drawings**

In order to illustrate the technical schemes in the embodiments of the Invention or in prior art more clearly, the drawings required in description of the embodiments or the prior art will be introduced briefly as follows. Obviously, the drawings described below are just a part of the embodiments of the Invention. A person skilled in the art is able to obtain other drawings according to these drawings without any creative work.

Figure 1 is a method schematic diagram of the preferred embodiments of the Invention;

Figure 2 is a system schematic diagram of the preferred embodiments of the Invention;

1. Judgment module; 2. Data input module; 3. Data operation module; 4. Display module

A clear and full description of the technical schemes of the embodiments of the Invention will be given in combination of the drawings of the embodiments of the Invention as follows. Obviously, the described embodiments are just a part rather than the whole of the embodiments of the Invention. Based on the embodiments of the Invention, any other embodiments obtained by a person skilled in the art without any creative work will fall within the protection scope of the Invention.

**Detailed Description of the Preferred Embodiments**

**Embodiment 1:**

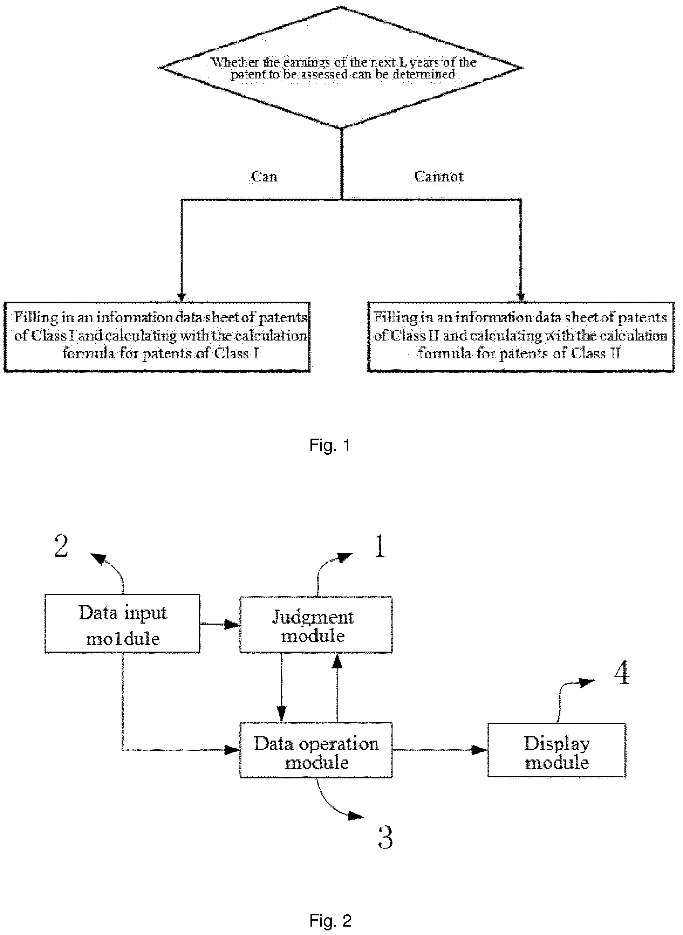

As shown in Fig. 1, the method for patent value assessment is implemented as follows:

confirming whether the earnings of the next L years of the patent to be assessed can be determined; the foreseeability of the future earnings is provided by a patent holder R; in case the patent holder R cannot foresee the earnings of the next L years, the assessment calculation for patents of Class I can be used.

Step I: filling in an information data sheet of patents of Class I: the patent type is of invention; R&D cost a=2000; application date: 2010-03-01; issue date: 2013-04-01; the current year: 2015; i.e.: $M_1$ =2010, $M_2$ =2013, $M_3$ =2015, $N_1$ =03 and $N_1$ =04; the invention patent is in a key industry, then f=1.5; the number of claims t=10 and the patent application cost b=8000.

Step II: calculating with the calculation formula for patents of Class I: the patent cost parameter X uses a preferred scheme: X=a+b+c; c=300*(10-10)=0, b=8000; X=2000+8000+0=10000;

In the embodiment, $N_1$ is March, $N_2$ is April, $N_1<N_2$, d=annual fee of $(M_3-M_1)^{th}$ year * $(1+t_1)^1$+annual fee of $(M_3-M_1-1)^{th}$ year * $(1+t_1)^2$+......+annual fee of $(M_2-M_1+1)^{th}$ year * $(1+t_1)^{M_3-M_2}$ = annual fee of the fifth year * $(1+t_1)$+annual fee of the fourth year * $(1+t_1)^2$ = 1200*(1+0.0325)+1200*(1+0.0325)^2=2518.27; the $t_1$ here is 0.0325, the basic annual interest rate of the year.

The patent is an invention patent, so the remaining years e=20+2010-2015=15, e is larger than 5, so the coefficient of remaining years g=1; the number of claims t=10, t is larger than 5, so the factor coefficient of claims h=1; the coefficient of key industry f=1.5; the product coefficient factor Y uses the preferred embodiment, Y=f*g*h=1.5*1*1=1.5.

Therefore, according to the assessment calculation for patents of Class I, the patent value P=[X*$(1+t_1)^{M_3-M_1}$+d] *Y = [10000*(1+0.0325)^5+2518.27]*1.5=21378.57.

**Embodiment 2:**

As shown in Fig. 1, the method for patent value assessment is implemented as follows:

confirming whether the earnings of the next L years of the patent to be assessed can be determined; the foreseeability of the future earnings is provided by a patent holder S; in case the patent holder S can foresee the earnings of the next L years, the assessment calculation for patents of Class II can be used.

Step I: filling in the information data sheet of patents of Class II: the patent is the type of utility model; the patent application date: 2011-03-01; the gross profit of non-patent products: A; the data of the gross profit of patent products: B; the data of the operation management expenses: D; and data of the income tax: F. The gross profits of non-patent products from the first to the fifth year are respectively: 1000, 2000, 3000, 4000 and 5000; the gross profits of patent products from the first to the fifth year are respectively: 10000, 20000, 30000, 40000 and 50000;

The operation management expenses from the first to the fifth year are respectively: 100, 200, 300, 400 and 500;

The income taxes from the first to the fifth year are respectively: 10, 20, 30, 40 and 50.

Step II: calculating with the calculation formula for patents of Class II: the remaining years of the utility model e=10+2011-2015=6, L=5, r=0.16.

Therefore, according to the assessment calculation for patents of Class II, the patent value

$$P=\sum_{i=1}^{L} \frac{B_i - A_i - D_i - F_i}{(1+r)^i} + \frac{B_L - A_L - D_L - F_L}{r(1+r)^L}\left[1 - \frac{1}{(1+r)^{e-L}}\right]=$$

=[(10000-1000-100-10)/(1+0.16)+(20000-2000-200-20)/(1+0.16)...+(50000-5000-500-50 )/(1+0.16)^5] +(50000-5000-500-50)/[0.16*(1+0.16)5]*[1-1/(1+01.6)]=97010.42

**Embodiment 3:**

As shown in Fig. 2, the online system for patent value assessment, wherein, it comprises a judgment module 1, a data input module 2, a data operation module 3 and a display module 4; the data input module 2 is used for reading the data inputted by users and sending it to the data operation module 3 and the judgment module 1; in the embodiment, the information shall be inputted by users comprises: whether the earnings of the next L years can be forecasted; the information data of the patents of Class I and the information data of the patents of Class II; wherein, the information data of the patents of Class I comprises information data of patent type, data of R&D cost, data of application date, data of issue date, data of key industry and data of number of claims; the information data of the patents of Class II comprises information data of patent type, data of patent application date, data of gross profit of non-patent products, data of gross profit of patent products, data of operation management expenses and data of income tax;

the judgment module 1 is used for judging the foreseeability of the patent earnings of the next L years and figuring out the judgment result;

the data operation module 3 is used for calculating the inputted data with different assessment method for patent value according to the judgment result and figuring out the patent value P;

the display module 4 is used for displaying the patent value P to customers.

The above are the preferred embodiments rather than the limitations of the Invention. Any amendment, equivalent replacement and improvement made within the range of the spirit and rule of the Invention shall be included in the protection scope of the Invention.

**Claims**

1. A method for patent value assessment, wherein, the steps are as follows:

   S00: Filling in the foreseeability of the patent earnings of the next L years based on the actual situation of the patent to be assessed; entering Step S10 in case the earnings of the next L years are unknown; entering Step S20 in case the earnings of the next L years are known;

   S10: Filling in an information data sheet of patents of Class I and calculating the value of the patent to be assessed with the assessment method for patents of Class I;

   S20: Filling in an information data sheet of patents of Class II and calculating the value of the patent to be assessed with an assessment method for patents of Class II.

2. The method for patent value assessment according to Claim 1, wherein:

   the information data sheet of patents of Class I comprises information data of patent type, data of R&D cost, data of application date, data of issue date, data of key industry and data of number of claims.

3. The method for patent value assessment according to Claim 1, wherein:

   the calculation formula for patents of Class I is:

$$P=[X*(1+t_1)^{M_3-M_1}+d]*Y;$$

   wherein, P is a patent value; X is a patent cost parameter; $t_1$ is a basic annual interest rate; $M_1$ is a particular year of patent application, $M_3$ is the current year of the patent; d is an annual fee cost and Y is a product coefficient factor.

4. The method for patent value assessment according to Claim 3, wherein:

   the patent cost parameter X comprises at least one of a patent R&D cost a, a patent application cost b and an additional charge cost c; the product coefficient factor Y comprises at least one of a coefficient of key industry f, a coefficient of remaining years g and a factor coefficient of claims h.

5. The method for patent value assessment according to Claim 4, wherein:

   the calculation method for the additional charge cost c is: confirming the number of claims t; when t is greater than or equal to 10, c=300*(t-10); when t is less than 10, c=0.

6. The method for patent value assessment according to Claim 4, wherein:

   the calculation method for the factor coefficient of claims is: confirming the number of claims t; when t is less than or equal to 5, h=t/5; when t is greater than 5, h=1;

The method for determining the coefficient of key industry f is: confirming whether the industry of the patent is a key industry; when it is a key industry, f=1.5 and when it is a non-key industry, f=1;

the calculation method for the coefficient of remaining years g is: confirming the remaining years e; when e is less than 5, g=(1-1/e); when e is greater than or equal to 5, g=1; wherein, e is greater than or equal to 1.

7. The method for patent value assessment according to Claim 3, wherein:

the calculation method for the annual fee cost is:

taking $M_2$ as the year of patent issuing; taking $N_1$ and $N_2$ as the month of patent application and the month of patent issuing respectively;

when $N_1$ is greater than $N_2$, d=annual fee of $(M_3-M_1)^{th}$ year * $(1+t1)1$+annual fee of $(M_3-M_1-1)^{th}$ year * $(1+t_1)^2$+......+annual fee of $(M_2-M_1)^{th}$ year * $(1+t_1)^{M_3-M_2+1}$;

when N1 is less than or equal to $N_2$, d=annual fee of $(M_3-M_1)^{th}$ year * $(1+t_1)1$+annual fee of $(M_3-M_1-1)^{th}$ year * $(1+t_1)^2$+......+annual fee of $(M_2-M_1+1)^{th}$ year * $(1+t_1)^{M_3-M_2}$.

8. The method for patent value assessment according to Claim 1, wherein:

the information data sheet of patents of Class II comprises information data of patent type, data of patent application date, data of gross profit of non-patent products, data of gross profit of patent products, data of operation management expenses and data of income tax.

9. The method for patent value assessment according to Claim 1, wherein, the calculation formula for patents of Class II is:

$$P = \sum_{i=1}^{L} \frac{B_i - A_i - D_i - F_i}{(1 + r)^i} + \frac{B_L - A_L - D_L - F_L}{r(1 + r)^L} \left[ 1 - \frac{1}{(1 + r)^{e-L}} \right],$$

wherein, P is a patent value, r is a discount rate, A is a gross profit of non-patent products, B is a gross profit of patent products, D is operation management expenses, F is an income tax and L is a fixed number of years of prospective earnings.

10. An online system for patent value assessment method according to any of Claims 1-9, wherein,

it comprises a judgment module (1), a data input module (2), a data operation module (3) and a display module (4);

the data input module (2) is used for reading the data inputted by users and sending it to the data operation module (3) and the judgment module (1);

the judgment module (1) is used for judging the foreseeability of the patent earnings of the next L years and figuring out the judgment result;

the data operation module (3) is used for calculating the inputted data with different assessment method for patent value according to the judgment result and figuring out the patent value P;

the display module (4) is used for displaying the patent value P to customers.

Fig. 1

Fig. 2

# INTERNATIONAL SEARCH REPORT

| International application No. |
| --- |
| PCT/CN2015/087801 |

**A. CLASSIFICATION OF SUBJECT MATTER**

G06Q 10/00 (2012.01) i

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

CNABS, CNKI, VEN: patent value evaluation, evaluation arithmetic, research and development, key industry, number of terms, patent, value, evaluation, income, known, unknown, information, data, arithmetic, type, cost, research, time, claim, online, type in, operation, judge, display, result, sort

**C. DOCUMENTS CONSIDERED TO BE RELEVANT**

| Category* | Citation of document, with indication, where appropriate, of the relevant passages | Relevant to claim No. |
| --- | --- | --- |
| A | CN 101030269 A (HONGFUJIN PRECISION INDUSTRY (SHENZHEN) CO., LTD. et al.), 05 September 2007 (05.09.2007), the whole document | 1-10 |
| A | CN 103679291 A (JIANGSU UNIVERSITY), 26 March 2014 (26.03.2014), the whole document | 1-10 |
| A | CN 101097620 A (INTERNATIONAL BUSINESS MACHINES CORP.), 02 January 2008 (02.01.2008), the whole document | 1-10 |
| A | CN 103116811 A (WUHAN UNIVERSITY), 22 May 2013 (22.05.2013), the whole document | 1-10 |
| A | CN 104112170 A (TEKGLORY BEIJING TECHNOLOGY CO., LTD.), 22 October 2014 (22.10.2014), the whole document | 1-10 |

☐ Further documents are listed in the continuation of Box C.   ☒ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 06 May 2016 (06.05.2016) | **18 May 2016 (18.05.2016)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **LIU, Jia** Telephone No.: (86-10) **62089528** |
| --- | --- |

Form PCT/ISA/210 (second sheet) (July 2009)

## INTERNATIONAL SEARCH REPORT
### Information on patent family members

International application No.

**PCT/CN2015/087801**

| Patent Documents referred in the Report | Publication Date | Patent Family | Publication Date |
|---|---|---|---|
| CN 101030269 A | 05 September 2007 | US 2007208739 A1 | 06 September 2007 |
| CN 103679291 A | 26 March 2014 | None | |
| CN 101097620 A | 02 January 2008 | US 2008262889 A1 | 23 October 2008 |
| | | US 2008004924 A1 | 03 January 2008 |
| CN 103116811 A | 22 May 2013 | None | |
| CN 104112170 A | 22 October 2014 | TW 201523498 A | 16 June 2015 |

Form PCT/ISA/210 (patent family annex) (July 2009)